# EUROPÄISCHE PATENTANMELDUNG

(11) **EP 4 201 853 A1**
(43) Veröffentlichungstag der Anmeldung: **28.06.2023**
(21) Anmeldenummer: 22214551.8
(22) Anmeldetag: 19.12.2022
(51) Int. Cl.: B65G 47/71, B65G 47/84

(54) **VORRICHTUNG UND VERFAHREN ZUM VERTEILEN VON BEHÄLTERN**

(30) Priorität: 21.12.2021 DE 102021134109
(71) Anmelder: KRONES AG, 93073 Neutraubling (DE)
(72) Erfinder: DEPNER, Christian, 93073 Neutraubling (DE); LUECKE, Jens, 93073 Neutraubling (DE); CLAUSEN, Niels, 93073 Neutraubling (DE)
(74) Vertreter: v. Bezold & Partner Patentanwälte - PartG mbB

(57) **Zusammenfassung**

Die Erfindung betrifft u.a. eine Vorrichtung (10) zum Verteilen von Behältern (12) für eine Behälterbehandlungsanlage (26), aufweisend einen einspurigen Behälterzulaufförderer (14), einen ersten einspurigen Behälterauslaufförderer (16), der als ein Linearförderer ausgeführt ist, einen zweiten einspurigen Behälterauslaufförderer (18), der als ein Linearförderer ausgeführt ist, und mindestens einen Transportstern (20, 21) mit mehreren Behälterhalterungen (22, 24) zum Halten der Behälter (12). Der mindestens eine Transportstern (20, 21) verbindet den einspurigen Behälterzulaufförderer (14) mit dem ersten einspurigen Behälterauslaufförderer (16) und dem zweiten einspurigen Behälterauslaufförderer (18) und ist dazu ausgebildet, die von dem einspurigen Behälterzulaufförderer (14) mit den mehreren Behälterhalterungen (22, 24) übernommenen Behälter (12) auf den ersten einspurigen Behälterauslaufförderer (16) und den zweiten einspurigen Behälterauslaufförderer (18) aufzuteilen.

## Beschreibung

### Technisches Gebiet

Die Erfindung betrifft eine Vorrichtung und ein Verfahren zum Verteilen von Behältern, z. B. für eine Behälterbehandlungsanlage.

### Technischer Hintergrund

Behälter können in Behälterbehandlungsanlagen durch die einzelnen Anlagenteile transportiert und bspw. gereinigt, gefüllt, verschlossen, geprüft, etikettiert oder bedruckt werden. Ein anhaltender Entwicklungstrend besteht darin, die Leistung der Anlagen immer weiter zu steigern.

Die DE 31 41 364 A1 offenbart einen kontinuierlich umlaufenden Rotor, dem zwei im entgegengesetzten Drehsinn mit geringerer Umfangsgeschwindigkeit rotierende Transportsterne nachgeschaltet sind. Jeder zweiten Tasche des Rotors ist ein zwangsgesteuerter Schieber zugeordnet, der die Gefäße an einer ersten Übergabestelle allmählich in die langsamer laufenden Taschen des ersten Transportsterns überführt. Die dazwischenliegenden anderen Taschen des Rotors weisen zwangsgesteuerte Klammern auf, welche jedes zweite Gefäß zu einer zweiten Übergabestelle bringen, wo es durch zwei ortsfeste Leitorgane allmählich in die langsamer laufenden Taschen des zweiten Transportsterns überführt wird. Zwischen den Teilkreisen des Rotors und den Teilkreisen der Transportsterne besteht ein Abstand, der etwas kleiner ist als der Gefäßdurchmesser.

Der Erfindung liegt die Aufgabe zu Grunde, eine verbesserte Technik zum Verteilen von Behältern zu schaffen, mit der sich bevorzugt eine Leistung einer Behälterbehandlungsanlage erhöhen lässt.

### Zusammenfassung der Erfindung

Die Aufgabe wird gelöst durch die Merkmale der unabhängigen Ansprüche. Vorteilhafte Weiterbildungen sind in den abhängigen Ansprüchen und der Beschreibung angegeben.

Ein Aspekt der vorliegenden Offenbarung betrifft eine Vorrichtung zum Verteilen von Behältern für eine Behälterbehandlungsanlage. Die Vorrichtung weist einen einspurigen Behälterzulaufförderer, einen ersten einspurigen Behälterauslaufförderer, der als ein Linearförderer ausgeführt ist, einen zweiten einspurigen Behälterauslaufförderer, der als ein Linearförderer ausgeführt ist, und mindestens einen Transportstern (bzw. Rundläufer-Förderer) mit mehreren Behälterhalterungen zum Halten der Behälter auf. Der mindestens eine Transportstern verbindet den einspurigen Behälterzulaufförderer mit dem ersten einspurigen Behälterauslaufförderer und dem zweiten einspurigen Behälterauslaufförderer. Der mindestens eine Transportstern ist dazu ausgebildet, die von dem einspurigen Behälterzulaufförderer mit den mehreren Behälterhalterungen übernommenen Behälter, vorzugsweise gleichmäßig oder ungleichmäßig, (z. B. nur) auf den ersten einspurigen Behälterauslaufförderer und den zweiten einspurigen Behälterauslaufförderer (z. B. statisch oder dynamisch) aufzuteilen.

Vorteilhaft kann die Vorrichtung ermöglichen, dass ohne Aufgabe der einspurigen Förderung ein einspuriger Behälterstrom auf zwei oder mehr einspurige Behälterströme aufgeteilt werden kann. Die konstruktive Umsetzung kann durch die Nutzung des mindestens einen Transportsterns zum Aufteilen der Behälter vergleichsweise einfach und flexibel an unterschiedliche Anforderungen anpassbar sein. Bevorzugt kann das Aufteilen dazu genutzt werden, dass die beiden von den Behälterauslaufförderern transportierten Behälterströme in einer oder mehreren nachfolgenden Behälterbehandlungseinrichtungen parallel behandelt werden können, wodurch sich eine Leistung erheblich steigern lässt. Vorzugsweise kann das gleichmäßige Aufteilen dazu genutzt werden, dass die Behälter in einer vorbestimmten Teilung weitertransportiert werden können. Dies kann bspw. ermöglichen, dass direkt stromabwärts von den Behälterauslaufförderern mindestens eine Behälterbehandlungseinrichtung angeordnet werden kann, die zum Betrieb auf eine vorbestimmte Teilung angewiesen ist.

Besonders bevorzugt kann der mindestens eine Transportstern die übernommenen Behälter gleichmäßig auf den ersten einspurigen Behälterauslaufförderer und den zweiten einspurigen Behälterauslaufförderer aufzuteilen, z. B. zu 50 % auf den ersten einspurigen Behälterauslaufförderer und zu 50 % auf den zweiten einspurigen Behälterauslaufförderer.

Es ist allerdings auch möglich, dass der mindestens eine Transportstern die übernommenen Behälter ungleichmäßig auf den ersten einspurigen Behälterauslaufförderer und den zweiten einspurigen Behälterauslaufförderer aufteilt, wobei bspw. mehr Behälter zu dem ersten einspurigen Behälterauslaufförderer verteilt werden als zu dem zweiten einspurigen Behälterauslaufförderer. Vorteilhaft kann die Vorrichtung somit bspw. zur Ausschleusung von Behältern genutzt werden (z. B. wenn die Füllhöhe nicht ausreichend ist). Dann würde der mindestens eine Transportstern bspw. nur diejenigen Behälter zu dem zweiten einspurigen Behälterauslaufförderer verteilen, die auszuschleusen sind, z. B. weil sie mangelhaft sind. Alle anderen Behälter könnte der mindestens eine Transportstern zu dem ersten einspurigen Behälterauslaufförderer verteilen. Vorteilhaft kann damit bspw. eine komplett dynamische Verteilung der Behälter erreicht werden.

Beispielsweise kann eine Inspektionseinrichtung zum Prüfen der Behälter stromaufwärts von dem mindestens einen Transportstern angeordnet sein, und der mindestens eine Transportstern kann die übernommenen Behälter in Abhängigkeit von einem Signal von der Inspektionseinrichtung wahlweise zu dem ersten einspurigen Behälterauslaufförderer oder dem zweiten einspurigen Behälterauslaufförderer aufteilen.

Es ist möglich, dass die Fördergeschwindigkeiten des mindestens einen Transportsterns, des ersten einspurigen Behälterauslaufförderers und/oder des zweiten einspurigen Behälterauslaufförderers gleich sind. Alternativ können die Fördergeschwindigkeiten bspw. zumindest teilweise unterschiedlich sein. Beispielsweise kann der erste einspurige Behälterauslaufförderer und/oder der zweite einspurige Behälterauslaufförderer ein größere oder kleinere Fördergeschwindigkeit aufweisen als der mindestens eine Transportstern.

Vorzugsweise können die mehreren Behälterhalterungen Greifer, Klammern und/oder Stützplatten zum Haltern der Behälter aufweisen.

Bevorzugt können die Behälterhalterungen dazu ausgebildet sein, die Behälter im Neckhandling oder im Basehandling zu halten.

In einem Ausführungsbeispiel ist der mindestens eine Transportstern dazu ausgebildet, die von dem einspurigen Behälterzulaufförderer übernommenen Behälter abwechselnd zu dem ersten einspurigen Behälterauslaufförderer und dem zweiten einspurigen Behälterauslaufförderer zu transportieren.

Vorzugsweise kann beim abwechselnden Aufteilen immer abwechselnd genau ein Behälter zu dem ersten einspurigen Behälterauslaufförderer und danach genau ein Behälter zu dem zweiten einspurigen Behälterauslaufförderer aufgeteilt werden. Alternativ kann beim abwechselnden Aufteilen abwechselnd mindestens ein Behälter zu dem ersten einspurigen Behälterauslaufförderer und danach mindestens ein Behälter zu dem zweiten einspurigen Behälterauslaufförderer aufgeteilt werden.

In einem weiteren Ausführungsbeispiel ist der mindestens eine Transportstern dazu ausgebildet, die mit einer ersten vorbestimmten Teilung (Teilungsabstand) von dem einspurigen Behälterzulaufförderer übernommenen Behälter an den ersten einspurigen Behälterauslaufförderer und den zweiten einspurigen Behälterauslaufförderer mit jeweils einer zweiten vorbestimmten Teilung (Teilungsabstand) zu übergeben, wobei die erste vorbestimmte Teilung kleiner ist als die zweite vorbestimmte Teilung, vorzugsweise halb so groß wie die zweite vorbestimmte Teilung.

Vorzugsweise kann die Teilung dabei ein Maß bzw. Abstand von einem Behältermittelpunkt eines Behälters zu einem Behältermittelpunkt des nachfolgenden oder vorherigen Behälters sein. Alternativ oder zusätzlich kann die Teilung ein Maß bzw. ein Abstand von einem Behälteraufnahmemittelpunkt einer Behälterhalterung zu einem Behälteraufnahmemittelpunkt der nachfolgenden oder vorherigen Behälterhalterung sein.

In einem weiteren Ausführungsbeispiel weist der mindestens eine Transportstern einen einzigen Transportstern auf.

In einer Ausführungsform sind die mehreren Behälterhalterungen zumindest teilweise bezüglich einer (z. B. vertikalen und/oder zentralen) Drehachse des Transportsterns radial bewegbar, vorzugsweise ein- und ausfahrbar. Vorteilhaft kann die radiale Bewegbarkeit der Behälterhalterungen dazu genutzt werden, die Behälter gleichmäßig auf den ersten und zweiten Behälterauslaufförderer aufzuteilen.

Beispielsweise können die als Greifer, Klammern oder Stützplatten ausgeführten Behälterhalterungen radial bewegbar sein, vorzugweise ein- und ausfahrbar, sein.

In einer weiteren Ausführungsform weist der Transportstern eine, vorzugsweise mechanische, Steuerung auf, die dazu konfiguriert ist, eine Radialbewegung nach außen mehrerer erster Behälterhalterungen der mehreren Behälterhalterungen derart zu bewirken, dass von den mehreren ersten Behälterhalterungen hin zu dem ersten einspurigen Behälterauslaufförderer transportierte Behälter ausgehend von dem einspurigen Behälterzulaufförderer radial nach außen bewegt werden, vorzugsweise während einer Drehung des Transportsterns und/oder bis auf eine Radialposition eines Übernahmeabschnitts des ersten einspurigen Behälterauslaufförderers bezüglich der Drehachse. Alternativ oder zusätzlich kann die Steuerung, dazu konfiguriert sein, eine Radialbewegung nach innen mehrerer zweiter Behälterhalterungen der mehreren Behälterhalterungen derart zu bewirken, dass von den mehreren zweiten Behälterhalterungen hin zu dem zweiten einspurigen Behälterauslaufförderer transportierte Behälter ausgehend von dem einspurigen Behälterzulaufförderer radial nach innen bewegt werden, vorzugsweise während einer Drehung des Transportsterns und/oder bis auf eine Radialposition eines Übernahmeabschnitts des zweiten einspurigen Behälterauslaufförderers bezüglich der Drehachse.

In einer Ausführungsvariante sind die mehreren Behälterhalterungen zumindest teilweise vertikal bewegbar (z. B. rein vertikal bewegbar oder vertikal schwenkbar). Vorteilhaft kann die vertikale Bewegbarkeit der Behälterhalterungen dazu genutzt werden, die Behälter gleichmäßig auf den ersten und zweiten Behälterauslaufförderer aufzuteilen.

Beispielsweise können die als Greifer, Klammern oder Stützplatten ausgeführten Behälterhalterungen vertikal bewegbar sein.

In einer weiteren Ausführungsvariante weist der Transportstern eine, vorzugsweise mechanische, Steuerung auf, die dazu konfiguriert ist, eine Vertikalbewegung nach unten mehrerer erster Behälterhalterungen der mehreren Behälterhalterungen derart zu bewirken, dass von den mehreren ersten Behälterhalterungen hin zu dem ersten einspurigen Behälterauslaufförderer transportierte Behälter gegenüber dem einspurigen Behälterzulaufförderer abgesenkt werden, vorzugsweise während einer Drehung des Transportsterns und/oder bis auf eine Höhe des ersten einspurigen Behälterauslaufförderers. Alternativ oder zusätzlich kann die Steuerung dazu konfiguriert sein, eine Vertikalbewegung nach oben mehrerer zweiter Behälterhalterungen der mehreren Behälterhalterungen derart zu bewirken, dass von den mehreren zweiten Behälterhalterungen hin zu dem zweiten einspurigen Behälterauslaufförderer transportierte Behälter gegenüber dem einspurigen Behälterzulaufförderer angehoben werden, vorzugsweise während einer Drehung des Transportsterns und/oder bis auf eine Höhe des zweiten einspurigen Behälterauslaufförderers.

In einem Ausführungsbeispiel weist der mindestens eine Transportstern einen ersten Transportstern und einen zweiten Transportstern auf. Der erste einspurige Behälterauslaufförderer ist (z. B. direkt) stromabwärts von dem ersten Transportstern angeordnet, und der zweite einspurige Behälterauslaufförderer ist (z. B. direkt) stromabwärts von dem zweiten Transportstern angeordnet. Vorteilhaft kann damit das gleichmäßige Aufteilen der Behälter auf konstruktiv einfache Weise dadurch gelöst werden, dass einfach zwei Transportsterne zum Aufteilen verwendet werden.

In einem weiteren Ausführungsbeispiel ist der einspurige Behälterzulaufförderer als ein Linearförderer ausgeführt, und der erste Transportstern und der zweite Transportstern sind auf entgegengesetzten Längsseiten des einspurigen Behälterzulaufförderers angeordnet, vorzugsweise einander direkt gegenüberliegend. Vorteilhaft kann damit eine besonders platzsparende Anordnung geschaffen werden.

In einem weiteren Ausführungsbeispiel sind der erste Transportstern und der zweite Transportstern dazu ausgebildet, mit den jeweiligen Behälterhalterungen die Behälter von dem einspurigen Behälterzulaufförderer abwechselnd zu übernehmen.

Vorzugsweise kann der einspurige Behälterzulaufförderer als ein Rundläufer oder ein Linearförderer ausgebildet sein.

In einer weiteren Ausführungsform sind der erste einspurige Behälterauslaufförderer und der zweite einspurige Behälterauslaufförderer parallel zueinander angeordnet (z. B. beabstandet voneinander), vorzugsweise nebeneinander auf gleicher Höhe oder (z. B. direkt) übereinander.

Bevorzugt sind der erste einspurige Behälterauslaufförderer und der zweite einspurige Behälterauslaufförderer als jeweils eigenständige Behälterförderer ausgeführt.

Ein weiterer Aspekt der vorliegenden Offenbarung betrifft eine Behälterbehandlungsanlage aufweisend eine Vorrichtung wie hierin offenbart. Die Behälterbehandlungsanlage kann ferner mindestens eines aufweisen von:
- eine Fülleinrichtung, vorzugsweise Füllerkarussell, zum Füllen der Behälter, die vorzugsweise stromaufwärts von der Vorrichtung angeordnet ist;
- (mindestens) eine Verschließeinrichtung, vorzugsweise Verschließerkarussell, zum Verschließen der Behälter, die (z. B. direkt) stromaufwärts von der Vorrichtung angeordnet ist oder die den einspurigen Behälterzulaufförderer aufweist oder die den mindestens einen Transportstern aufweist;
- eine (z. B. doppelstöckige) Pasteurisiereinrichtung mit zwei, vorzugsweise übereinander angeordneten, Behältereinlässen, wobei einer der zwei Behältereinlässe (z. B. direkt) stromabwärts von dem ersten einspurigen Behälterauslaufförderer angeordnet ist und der andere der zwei Behältereinlässe (z. B. direkt) stromabwärts von dem zweiten einspurigen Behälterauslaufförderer angeordnet ist; und
- eine erste Etikettiereinrichtung zum Etikettieren der Behälter, die (z. B. direkt) stromabwärts von dem ersten einspurigen Behälterauslaufförderer angeordnet ist, und eine zweite Etikettiereinrichtung, die (z. B. direkt) stromabwärts von dem zweiten einspurigen Behälterauslaufförderer angeordnet ist.

Ein weiterer Aspekt der vorliegenden Offenbarung betrifft ein Verfahren zum Verteilen von Behältern, vorzugsweise mittels einer Vorrichtung wie hierin offenbart. Das Verfahren weist ein Zuführen der Behälter zu mindestens einem Transportstern mittels eines einspurigen Behälterzulaufförderers auf. Das Verfahren weist ein Übernehmen der zugeführten Behälter mittels mehrerer Behälterhalterungen des mindestens eines Transportsterns auf. Das Verfahren weist ferner ein gleichmäßiges Aufteilen der übernommenen Behälter zu einem ersten einspurigen Behälterauslaufförderer, der als ein Linearförderer ausgeführt ist, und einem zweiten einspurigen Behälterauslaufförderer, der als ein Linearförderer ausgeführt ist, mittels des mindestens einen Transportsterns auf. Vorteilhaft kann das Verfahren die gleichen Vorteile erzielen, die bereits unter Bezugnahme auf die Vorrichtung beschrieben wurden.

In einem Ausführungsbeispiel weist das gleichmäßige Aufteilen ein abwechselndes Transportieren der übernommenen Behälter zu dem ersten einspurigen Behälterauslaufförderer und dem zweiten einspurigen Behälterauslaufförderer mittels des mindestens einen Transportsterns auf.

In einem weiteren Ausführungsbeispiel erfolgt das Zuführen der Behälter mit einer ersten vorbestimmten Teilung (Teilungsabstand), und/oder das gleichmäßige Aufteilen erfolgt derart, dass die Behälter an den ersten einspurigen Behälterauslaufförderer und den zweiten einspurigen Behälterauslaufförderer mit jeweils einer zweiten vorbestimmten Teilung (Teilungsabstand) übergeben werden, wobei die erste vorbestimmte Teilung kleiner als die zweite vorbestimmte Teilung ist, vorzugsweise halb so groß.

Beispielsweise können die Behälter als Flaschen, Dosen, Kanister, Kartons, Flakons usw. ausgeführt sein.

Vorzugsweise kann sich der Begriff "Steuerung" auf eine Elektronik (z. B. ausgeführt als eine Treiberschaltung oder mit Mikroprozessor(en) und Datenspeicher) und/oder eine mechanische, pneumatische und/oder hydraulische Steuerung beziehen, die je nach Ausbildung Steuerungsaufgaben und/oder Regelungsaufgaben und/oder Verarbeitungsaufgaben übernehmen kann. Auch wenn hierin der Begriff "Steuern" verwendet wird, kann damit gleichsam zweckmäßig auch "Regeln" bzw. "Steuern mit Rückkopplung" und/oder "Verarbeiten" umfasst bzw. gemeint sein.

Die zuvor beschriebenen bevorzugten Ausführungsformen und Merkmale der Erfindung sind beliebig miteinander kombinierbar.

### Kurzbeschreibung der Figuren

Weitere Einzelheiten und Vorteile der Erfindung werden im Folgenden unter Bezug auf die beigefügten Zeichnungen beschrieben. Es zeigen:
- Figur 1: eine schematische Draufsicht auf eine Vorrichtung zum Verteilen von Behältern gemäß einem Ausführungsbeispiel der vorliegenden Offenbarung;
- Figur 2: eine schematische Draufsicht auf eine Behälterbehandlungsanlage aufweisend die Vorrichtung zum Verteilen von Behältern gemäß Figur 1;
- Figur 3: eine schematische Draufsicht auf eine Vorrichtung zum Verteilen von Behältern gemäß einem Ausführungsbeispiel der vorliegenden Offenbarung;
- Figur 4: eine schematische Seitenansicht eines Abschnitts der Vorrichtung zum Verteilen von Behältern von Figur 3 entlang der Linie A-A aus Figur 3;
- Figur 5: eine schematische Seitenansicht eines Abschnitts der Vorrichtung zum Verteilen von Behältern von Figur 3 entlang der Linie B-B aus Figur 3;
- Figur 6: eine schematische Draufsicht auf eine Vorrichtung zum Verteilen von Behältern gemäß einem Ausführungsbeispiel der vorliegenden Offenbarung.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

### Detaillierte Beschreibung beispielhafter Ausführungsformen

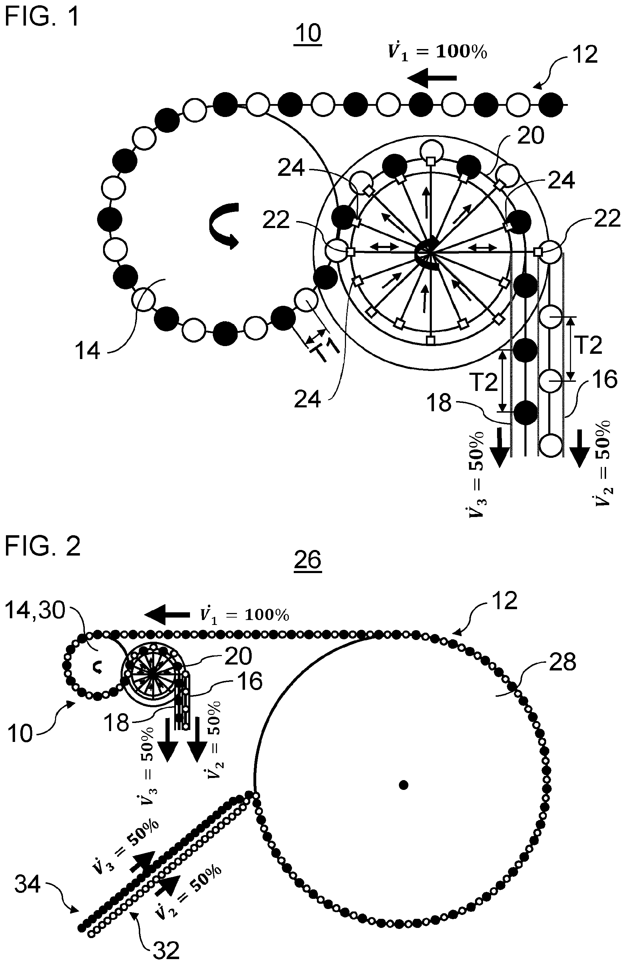

Die Figur 1 zeigt eine Vorrichtung 10 zum Verteilen von Behältern 12.

Die Vorrichtung 10 weist einen einspurigen Behälterzulaufförderer 14, einen ersten einspurigen Behälterauslaufförderer 16, einen zweiten einspurigen Behälterauslaufförderer 18 und einen Transportstern (Transferstern) bzw. Rundläufer-Förderer 20 auf.

Der Behälterzulaufförderer 14 kann bspw. als ein Rundläufer, wie in Figur 1 dargestellt ist, oder als ein Linearförderer ausgeführt sein. Der Behälterzulaufförderer 14 kann ein eigenständiger Behälterförderer sein. Es ist allerdings auch möglich, dass der Behälterzulaufförderer 14 in einer Behälterbehandlungseinrichtung umfasst ist, die die Behälter 12 behandeln (z. B. verschließen) und fördern kann.

Der Behälterzulaufförderer 14 führt die Behälter 12 zu dem Transportstern 20 zu. Der Behälterzulaufförderer 14 kann (behälter-) stromaufwärts von dem Transportstern 20 angeordnet sein, bevorzugt direkt stromaufwärts von dem Transportstern 20. Der Behälterzulaufförderer 14 kann derart mit dem Transportstern 20 verbunden sein, dass die Behälter 12 von dem Behälterzulaufförderer 14 direkt an den Transportstern 20 übergeben werden können. Der Behälterzulaufförderer 14 kann die Behälter 12 während des Transports bspw. am Behälterboden, am Behälterkörper und/oder am Behälterhals (z. B. am Behälterhalsring) stützen.

Der erste Behälterauslaufförderer 16 und der zweite Behälterauslaufförderer 18 sind als Linearförderer ausgeführt. Beispielsweise können die Behälterauslaufförderer 16, 18 als Bandförderer, Plattenförderer oder Mattenförderer (z. B. Mattenkettenförderer) ausgeführt sein.

Der erste Behälterauslaufförderer 16 und der zweite Behälterauslaufförderer 18 können (Behälter-) stromabwärts von dem Transportstern 20 angeordnet sein, vorzugsweise direkt stromabwärts von dem Transportstern 20. Der erste Behälterauslaufförderer 16 und der zweite Behälterauslaufförderer 18 können derart mit dem Transportstern 20 verbunden sein, dass die Behälter 12 von dem Transportstern 20 zu den Behälterauslaufförderern 16, 18 übergeben werden können.

Bevorzugt sind die Behälterauslaufförderer 16 und 18 parallel angeordnet. Beispielsweise können die Behälterauslaufförderer 16 und 18 auf gleicher Höhe nebeneinander angeordnet sein, wie in Figur 1 dargestellt ist. Ein Übernahmeabschnitt zum Übernehmen der Behälter 12 von dem Transportstern 20 kann bei dem ersten Behälterauslaufförderer 16 bspw. radial weiter außen bezüglich einer Drehachse des Transportsterns 20 sein als beim zweiten Behälterauslaufförderer 18.

Die Behälterauslaufförderer 16, 18 können die Behälter 12 während des Transports bspw. am Behälterboden, am Behälterkörper und/oder am Behälterhals (z. B. am Behälterhalsring) stützen.

Der Transportstern 20 verbindet den Behälterzulaufförderer 14 und die Behälterauslaufförderer 16, 18 miteinander. Der Transportstern 20 übernimmt die Behälter 12 von dem Behälterzulaufförderer 14 und teilt die Behälter 12 gleichmäßig auf die Behälterauslaufförderer 16, 18 auf.

Der Transportstern 20 weist mehrere Behälterhalterungen 22, 24 auf. Zur besseren Übersichtlichkeit sind in Figur 1 nur einige der Behälterhalterungen 22, 24 mit einem Bezugszeichen versehen. Die Behälterhalterungen 22, 24 können um einen Umfang des Transportsterns 20 herum angeordnet sein, vorzugsweise gleichmäßig.

Die Behälterhalterungen 22, 24 sind bevorzugt dazu ausgebildet, jeweils einen der Behälter 12 zum Transportieren zu halten. Die Behälterhalterungen 22, 24 können die Behälter 12 während des Transports bspw. am Behälterboden, am Behälterkörper und/oder am Behälterhals (z. B. am Behälterhalsring) stützen, vorzugsweise tragen. Bspw. können die Behälterhalterungen 22, 24 als (z. B. aktive oder passive) Klammern oder Greifer ausgeführt sein.

Der Transportstern 20 ist dazu ausgebildet, die von dem Behälterzulaufförderer 14 mit den mehreren Behälterhalterungen 22, 24 übernommenen Behälter 12, vorzugsweise gleichmäßig, auf den ersten Behälterauslaufförderer 16 und den zweiten Behälterauslaufförderer 18 aufzuteilen. Beim gleichmäßigen Aufteilen kann ein erster Behälterstrom V̇₁ in einen zweiten Behälterstrom V̇₂ und in einen dritten Behälterstrom V̇₃ aufgeteilt werden, wobei der zweite und dritte Behälterstrom V̇₂, V̇₃ bevorzugt jeweils die Hälfte des ersten Behälterstroms V̇₁ ist.

Ein Behälterstrom kann durch eine pro vorgegebener Zeiteinheit transportierte Behälteranzahl definiert sein.

Bei einem ebenfalls möglichen, ungleichmäßigen Aufteilen kann der zweite Behälterstrom V̇₂ kleiner oder größer als der dritte Behälterstrom V̇₃ sein. Beispielsweise kann zweite Behälterstrom V̇₂ rund 2/3 des ersten Behälterstroms V̇₁ betragen, und der dritte Behälterstrom V̇₃ kann bspw. 1/3 der des ersten Behälterstroms V̇₁ betragen.

Es ist möglich, dass das Aufteilen statisch ist, d.h. sich im Betrieb nicht verändert. Es ist alternativ möglich, dass das Aufteilen dynamisch ist, d.h. sich im Betrieb verändert bzw. verändern kann.

Die von dem Behälterzulaufförderer 14 übernommenen Behälter 12 können von dem Transportstern 20 abwechselnd zu dem ersten Behälterauslaufförderer 16 und dem zweiten Behälterauslaufförderer 18 transportiert werden. Dies ist in Figur 1 bspw. daran erkennbar, dass die vom Behälterzulaufförderer 14 transportierten Behälter 12 abwechselnd weiß und schwarz gekennzeichnet sind, der erste Behälterauslaufförderer 16 jedoch nur noch weiß gekennzeichnete Behälter 12 transportiert und der zweite Behälterauslaufförderer 18 nur noch schwarz gekennzeichnete Behälter 12 transportiert.

Um die Behälter 12 gleichmäßig auf die Behälterauslaufförderer 16 und 18 aufzuteilen, sind beim Transportstern 20 von Figur 1 die Behälterhalterungen 22, 24 teilweise radial bewegbar bzgl. einer (zentralen) Drehachse des Transportstern 20.

Im Einzelnen können die Behälterhalterungen 22, 24 mehrere erste Behälterhalterungen 22 und mehrere zweite Behälterhalterungen 24 aufweisen. Die ersten und zweiten Behälterhalterungen 22 und 24 können abwechselnd um einen Umfang des Transportsterns 20 angeordnet sein. Auf eine erste Behälterhalterung 22 kann eine zweite Behälterhalterung 24 folgen und darauf wieder eine erste Behälterhalterung 22 usw.

Die ersten Behälterhalterungen 22 können Behälter 12 (weiß gekennzeichnet in Figur 1) von einem Übernahmeabschnitt des Behälterzulaufförderers 14 übernehmen. Die ersten Behälterhalterungen 22 können die übernommenen Behälter 12 halten, während der Transportstern 20 sich dreht. Die ersten Behälterhalterungen 22 können die übernommenen Behälter 12 an einen Übernahmeabschnitt des ersten Behälterauslaufförderers 16 übergeben.

Die zweiten Behälterhalterungen 24 können (andere) Behälter 12 (schwarz gekennzeichnet in Figur 1) von einem Übernahmeabschnitt des Behälterzulaufförderers 14 übernehmen. Die zweiten Behälterhalterungen 24 können die übernommenen Behälter 12 halten, während der Transportstern 20 sich dreht. Die zweiten Behälterhalterungen 24 können die übernommenen Behälter 12 an einen Übernahmeabschnitt des zweiten Behälterauslaufförderers 18 übergeben.

Der Transportstern 20 kann die Behälter 12 mit einer ersten vorbestimmten bzw. festen Teilung (Teilungsabstand) T1 von dem Behälterzulaufförderer 14 übernehmen. Beispielsweise kann der Behälterzulaufförderer 14 Behälterhalterungen aufweisen, die mit der ersten Teilung T1 angeordnet sind. Alternativ kann der Behälterzulaufförderer 14 bspw. eine Einteilschnecke oder Vereinzelungsschnecke zum Positionieren der Behälter 12 mit der ersten festen Teilung T1 aufweisen, z. B. wenn der Behälterzulaufförderer 14 als ein Linearförderer ausgeführt ist.

Der Transportstern 20 kann die Behälter 12 mit einer zweiten vorbestimmten bzw. festen Teilung (Teilungsabstand) jeweils an den ersten und zweiten Behälterauslaufförderer 16, 18 übergeben. Die erste Teilung T1 ist bevorzugt kleiner als die zweite Teilung T2, besonders bevorzugt halb so groß wie die zweite Teilung T2.

Beispielsweise können zwei benachbarte Behälterhalterungen der ersten Behälterhalterungen 22 jeweils mit der zweiten Teilung T2 angeordnet sein, und zwei benachbarte Behälterhalterungen der zweiten Behälterhalterungen 24 können jeweils ebenfalls mit der zweiten Teilung T2 angeordnet sein. Ein Paar aus erster und zweiter Behälterhalterung 22, 24 kann mit der ersten Teilung T1 angeordnet sein.

Im Ausführungsbeispiel von Figur 1 können die ersten Behälterhalterungen 22 radial bewegbar sein, wohingegen die zweiten Behälterhalterungen 24 radial feststehend sein können.

Die ersten Behälterhalterungen 22 können nach der Übernahme der Behälter 12 von dem Behälterzulaufförderer 14 bezüglich der Drehachse bzw. Mittelachse des Transportsterns 20 radial ausfahren. Dabei kann sich der Transportstern 20 drehen. Die ersten Behälterhalterungen 20 können bspw. so weit ausfahren, bis eine Radialposition eines Übernahmeabschnitts des ersten Behälterauslaufförderers 16 bezüglich der Drehachse des Transportsterns 20 erreicht ist.

Nach der Übergabe der Behälter 12 von den ersten Behälterhalterungen 22 an den ersten Behälterauslaufförderer 16 können die ersten Behälterhalterungen 22 bezüglich der Drehachse des Transportsterns 20 eingefahren werden. Dabei kann sich der Transportstern 20 drehen. Die ersten Behälterhalterungen 22 können bspw. so weit eingefahren, bis eine Radialposition eines Übernahmeabschnitts des Behälterzulaufförderers 14 bezüglich der Drehachse des Transportsterns 20 erreicht ist.

In einer alternativen Ausführungsform ist es bspw. möglich, dass die ersten Behälterhalterungen 22 nach der Übernahme der Behälter 12 bezüglich der Drehachse bzw. Mittelachse des Transportsterns 20 radial einfahren, vorzugsweise während sich der Transportstern 20 dreht und/oder bis auf eine Radialposition des Übernahmeabschnitts des ersten Behälterauslaufförderers 16. Nach der Behälterübergabe an den ersten Behälterauslaufförderer 16 können die ersten Behälterhalterungen 22 wieder entsprechend radial ausfahren, vorzugsweise während sich der Transportstern 20 dreht und/oder bis auf eine Radialposition des Übernahmeabschnitts des Behältereinlaufförderers 14.

Es ist auch möglich, dass die zweiten Behälterhalterungen 24 radial bewegbar sind. Beispielsweise können die zweiten Behälterhalterungen 24 nach der Übernahme der Behälter 12 bezüglich der Drehachse bzw. Mittelachse des Transportsterns 20 radial ausfahren oder einfahren, vorzugsweise während sich der Transportstern 20 dreht und/oder bis auf eine Radialposition des Übernahmeabschnitts des zweiten Behälterauslaufförderers 18.

Bevorzugt weist der Transportstern 20 eine Steuerung auf, die dazu konfiguriert ist, die radiale Bewegung der ersten Behälterhalterungen 22 und/oder der zweiten Behälterhalterungen zu bewirken.

Besonders bevorzugt ist die Steuerung eine mechanische Steuerung. Bspw. kann die mechanische Steuerung eine umlaufende Steuerkurve oder Führungskurve aufweisen. Eine Radialbewegung der Behälterhalterungen 22 und/oder 24 kann abhängig von einem Verlauf der Kurve sein. Die Kurve kann in Wirkverbindung zu den radial bewegbaren Behälterhalterungen 22 und/oder 24 sein. Die radial bewegbaren Behälterhalterungen 22 und/oder 24 können an der Kurve geführt sein. Abhängig vom Verlauf der Kurve können die bewegbare Behälterhalterungen 22 und/oder 24 bewegt werden. Die Führung kann bspw. jeweils ein an der Kurve geführtes Führungselement, z. B. Rolle oder Gleitschuh, und ein Verbindungsbauteil, z. B. Verbindungsgestänge, das das Führungselement mit der jeweiligen Behälterhalterung 22 und/oder 24 verbindet, aufweisen. Bspw. kann die Kurve ringförmig sein, wobei sich in einer Umfangsrichtung des Transportsterns ein (Radius-) Abstand zwischen der Kurve und der Drehachse des Transportsterns verändert, z. B. hin zu dem Übernahmeabschnitt des ersten und/oder zweiten Behälterauslaufförderers 16, 18 zu- oder abnimmt.

Alternativ oder zusätzlich kann die Steuerung bspw. elektronisch, pneumatisch oder hydraulisch sein. Bspw. können die radial bewegbaren Behälterhalterungen 22 und/oder 24 mit einem elektromotorischen, elektromagnetischen, pneumatischen oder hydraulischen Antrieb zum radialen Bewegen verbunden sein.

Die Figur 2 zeigt eine Behälterbehandlungsanlage 26 mit der Vorrichtung 10.

Die Behälterbehandlungsanlage 26 kann bspw. eine Fülleinrichtung 28 und/oder eine Verschließeinrichtung 30 aufweisen.

Die Fülleinrichtung 28 kann die Behälter 12 füllen, vorzugsweise mit einem flüssigen oder pastösen Medium. Die Fülleinrichtung 28 ist vorzugsweise als ein Füllerkarussell ausgeführt. Die Fülleinrichtung 28 kann mehrere Füllventile zum gleichzeitigen Befüllen mehrerer Behälter 12 aufweisen. Bspw. können die Füllventile um einen Umfang der als Füllerkarussell ausgeführten Fülleinrichtung 28 angeordnet sein. Die Fülleinrichtung 28 kann bezüglich eines Behälterstroms stromaufwärts von der Verschließeinrichtung 30 und/oder dem Transportstern 20 angeordnet sein.

Es ist möglich, dass zwei Behälterzulaufförderer 32, 34 die Behälter 12 zu der Fülleinrichtung 28 transportieren. Beispielsweise kann der erste Behälterzulaufförderer 32 Behälter 12 eines ersten Formats oder Designs zu der Fülleinrichtung 28 transportieren, und der zweite Behälterzulaufförderer 34 kann Behälter 12 eines zweiten Formats oder Designs zu der Fülleinrichtung 28 transportieren. Die Fülleinrichtung 28 kann die Behälter 12 von beiden Behälterzulaufförderern 32, 34 empfangen, bevorzugt abwechselnd. Die Behälterzulaufförderer 32, 34 können bspw. als Linearförderer ausgeführt sein, wie in Figur 2 dargestellt ist, oder als Rundläufer-Förderer.

Die Behälterbehandlungsanlage 26 kann so eingestellt sein, dass diejenigen Behälter 12, die von dem ersten Behälterzulaufförderer 32 zu der Fülleinrichtung 28 transportiert werden, später von der Vorrichtung 10 bzw. dem Transportstern 20 zu dem ersten Behälterauslaufförderer 16 verteilt werden. Diejenigen Behälter 12, die von dem zweiten Behälterzulaufförderer 34 zu der Fülleinrichtung 28 transportiert werden, können später von der Vorrichtung 10 bzw. dem Transportstern 20 zu dem zweiten Behälterauslaufförderer 18 verteilt werden.

Die Behälterströme V̇₂ können beim ersten Behälterzulaufförderer 32 und beim ersten Behälterauslaufförderer 16 gleich groß sein, ebenso wie die Behälterströme V̇₃ beim zweiten Behälterzulaufförderer 34 und beim zweiten Behälterauslaufförderer 18.

Die Verschließeinrichtung 30 kann die Behälter 12 verschließen, z. B. mit einem Deckel, einem Korken, einem Kronkorken oder einem Schraubverschluss. Die Verschließeinrichtung 30 kann vorzugsweise als ein Verschließerkarussell ausgeführt sein. Die Verschließeinrichtung 30 kann mehrere Verschließstationen zum gleichzeitigen Verschließen mehrerer Behälter 12 aufweisen. Bspw. können die Verschließstationen um einen Umfang der als Verschließerkarussell ausgeführten Verschließeinrichtung 30 angeordnet sein. Die Verschließeinrichtung 30 kann bezüglich eines Behälterstroms stromabwärts von der Fülleinrichtung 28 und/oder stromaufwärts von dem Transportstern 20 angeordnet sein.

Die Verschließeinrichtung 30 kann den Behälterzulaufförderer 14 aufweisen. Der Transportstern 20 kann daher direkt stromabwärts von der Verschließeinrichtung 30 angeordnet sein bzw. mit der Verschließeinrichtung 30 geblockt sein.

Es ist möglich, dass stromabwärts von der Vorrichtung 10 bzw. den Behälterauslassförderern 16, 18 mindestens eine Behälterbehandlungseinrichtung zum Behandeln der Behälter 12 angeordnet ist (nicht in Figur 2 dargestellt).

Beispielsweise kann eine Pasteurisiereinrichtung zum Pasteurisieren der Behälter 12 bzw. des in die Behälter 12 gefüllten Füllguts stromabwärts von den Behälterauslassförderern 16, 18 angeordnet sein. Bevorzugt kann die Pasteurisiereinrichtung zwei einspurige Behältereinlässen aufweisen. Einer der zwei Behältereinlässe kann bspw. direkt stromabwärts von dem ersten Behälterauslaufförderer 16 angeordnet sein. Der andere der zwei Behältereinlässe kann bspw. direkt stromabwärts von dem zweiten Behälterauslaufförderer 18 angeordnet sein.

Es ist auch möglich, dass eine erste Etikettiereinrichtung zum Etikettieren der Behälter 12 stromabwärts von dem ersten Behälterauslaufförderer 16 angeordnet ist. Eine zweite Etikettiereinrichtung zum Etikettieren der Behälter 12 kann stromabwärts von dem zweiten Behälterauslaufförderer 18 angeordnet sein.

Beispielsweise kann die erste Etikettiereinrichtung direkt stromabwärts von dem ersten Behälterauslaufförderer 16 angeordnet sein, und die zweite Etikettiereinrichtung kann direkt stromabwärts von dem zweiten Behälterauslaufförderer 18 angeordnet sein.

Alternativ kann bspw. die Pasteurisiereinrichtung zwei vorzugsweise einspurige Behälterauslässe aufweisen. Die erste Etikettiereinrichtung kann bspw. direkt stromabwärts von einem der zwei Behälterauslässe angeordnet sein, und die zweite Etikettiereinrichtung kann bspw. direkt stromabwärts von dem anderen der zwei Behälterauslässe angeordnet sein.

Es ist ebenfalls möglich, dass der Transportstern 20 (bzw. 21) in einer Behälterbehandlungseinrichtung, z. B. einer Verschließeinrichtung zum Verschließen der Behälter 12, umfasst ist.

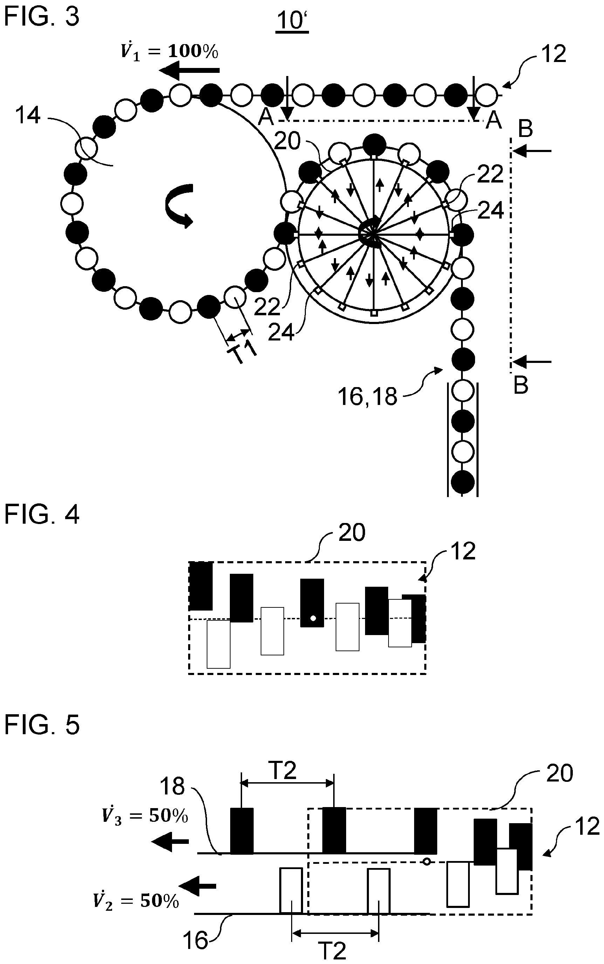

Die Figuren 3 bis 5 zeigen eine Vorrichtung 10' zum Verteilen von Behältern 12 bzw. Ausschnitte davon in verschiedenen Ansichten. Die Figuren 4 und 5 zeigen rein schematische Seitenansichten des Transportsterns 20 und der transportierten Behälter 12, wobei aus Übersichtsgründen keine konstruktiven Einzelheiten des Transportsterns 20 dargestellt sind.

Die Vorrichtung 10' ist gegenüber der Vorrichtung 10 von Figur 1 modifiziert. Nachfolgend sind die wesentlichen Unterschiede beschrieben.

Die Behälterauslaufförderer 16, 18 sind übereinander angeordnet. Beispielsweise ist der zweite Behälterauslaufförderer 18 über dem ersten Behälterauslaufförderer 16 angeordnet.

Besonders bevorzugt ist stromabwärts von den zwei Behälterauslaufförderern 16, 18 die Pasteurisiereinrichtung angeordnet, die doppelstöckig ausgeführt ist. Die doppelstöckige Pasteurisiereinrichtung kann zwei einspurige Behältereinlässe aufweisen, die übereinander angeordnet sind. Einer der zwei Behältereinlässe kann bspw. direkt stromabwärts von dem ersten Behälterauslaufförderer 16 angeordnet sein. Der andere der zwei Behältereinlässe kann bspw. direkt stromabwärts von dem zweiten Behälterauslaufförderer 18 angeordnet sein, bevorzugt über dem ersten Behältereinlass.

Beim Transportstern 20 der Vorrichtung 10' können die Behälterhalterungen 22, 24 vertikal bewegbar sein. Die vertikale Bewegbarkeit kann bspw. rein vertikal sein oder eine vertikale Schwenkbewegung sein.

Die ersten Behälterhalterungen 22 können nach der Übernahme der Behälter 12 von dem Behälterzulaufförderer 14 abgesenkt werden und dabei die übernommenen Behälter 12 absenken, wie bspw. in den Figuren 4 und 5 für die weiß gekennzeichneten Behälter 12 dargestellt ist. Dabei kann sich der Transportstern 20 drehen. Die ersten Behälterhalterungen 22 können bspw. so weit abgesenkt werden, bis eine Höhenposition eines Übernahmeabschnitts des ersten Behälterauslaufförderers 16 erreicht ist.

Nach der Übergabe der Behälter 12 von den ersten Behälterhalterungen 22 an den ersten Behälterauslaufförderer 16 können die ersten Behälterhalterungen 22 wieder angehoben werden. Dabei kann sich der Transportstern 20 drehen. Die ersten Behälterhalterungen 22 können bspw. so weit angehoben werden, bis eine Höhenposition eines Übernahmeabschnitts des Behälterzulaufförderers 14 erreicht ist.

Die zweiten Behälterhalterungen 24 können nach der Übernahme der Behälter 12 von dem Behälterzulaufförderer 14 angehoben werden und dabei die übernommenen Behälter 12 anheben, wie bspw. in den Figuren 4 und 5 für die schwarz gekennzeichneten Behälter 12 dargestellt ist. Dabei kann sich der Transportstern 20 drehen. Die zweiten Behälterhalterungen 24 können bspw. so weit angehoben werden, bis eine Höhenposition eines Übernahmeabschnitts des zweiten Behälterauslaufförderers 18 erreicht ist.

Nach der Übergabe der Behälter 12 von den zweiten Behälterhalterungen 24 an den zweiten Behälterauslaufförderer 18 können die zweiten Behälterhalterungen 24 wieder abgesenkt werden. Dabei kann sich der Transportstern 20 drehen. Die zweiten Behälterhalterungen 24 können bspw. so weit abgesenkt werden, bis eine Höhenposition eines Übernahmeabschnitts des Behälterzulaufförderers 14 erreicht ist.

In einer alternativen Ausführungsform ist es bspw. möglich, dass nur die ersten Behälterhalterungen 22 nach der Übernahme der Behälter 12 abgesenkt werden und die zweiten Behälterhalterungen 24 bezüglich einer Vertikalachse unbewegt sind. Alternativ können bspw. nur die zweiten Behälterhalterungen 24 nach der Übernahme der Behälter 12 angehoben werden, und die ersten Behälterhalterungen 22 können bezüglich einer Vertikalachse unbewegt sein.

Die Bewegung der Behälterhalterungen 22 und/oder 24 kann bspw. mit einer mechanischen, pneumatischen, hydraulischen oder elektronischen Steuerung bewirkt bzw. gesteuert sein, wie bereits unter Bezugnahme auf die Vorrichtung 10 beschrieben wurde. Mit Blick auf eine Steuer- oder Führungskurve der mechanischen Steuerung könnte diese bspw. einen sich verändernden Höhenverlauf haben, um die vertikale Bewegung der Behälterhalterungen 22 und/oder 24 zu bewirken.

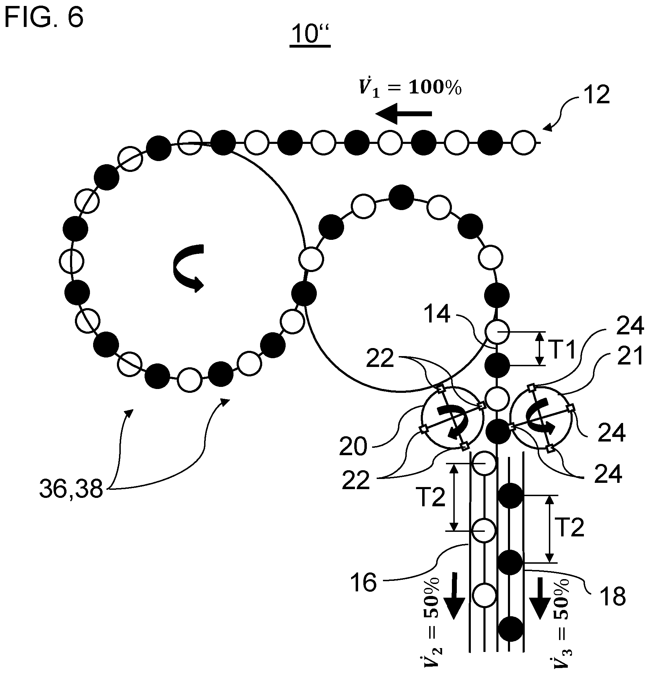

Die Figur 6 zeigt eine Vorrichtung 10" zum Verteilen von Behältern 12. Die Vorrichtung 10" ist gegenüber der Vorrichtung 10 von Figur 1 modifiziert. Nachfolgend sind die wesentlichen Unterschiede beschrieben.

Die Vorrichtung 10" weist einen ersten Transportstern 20 und einen zweiten Transportstern 21 auf.

Der erste Transportstern 20 kann die ersten Behälterhalterungen 22 aufweisen. Die ersten Behälterhalterungen 22 können mit der zweiten Teilung T2 um einen Umfang des ersten Transportsterns 20 angeordnet sein.

Der zweite Transportstern 21 kann die zweiten Behälterhalterungen 24 aufweisen. Die zweiten Behälterhalterungen 24 können mit der zweiten Teilung T2 um einen Umfang des zweiten Transportsterns 21 angeordnet sein.

Der Behälterzulaufförderer 14 ist bevorzugt als ein Linearförderer ausgeführt. Alternativ kann der Behälterzulaufförderer 14 bspw. als ein Transportstern bzw. Rundläufer-Förderer ausgeführt sein. Stromaufwärts von dem Behälterzulaufförderer 14 kann bspw. mindestens ein weiterer Behälterförderer 36 und/oder mindestens eine Behälterbehandlungseinrichtung 38 angeordnet sein

Bevorzugt sind die beiden Behälterauslaufförderer 16, 18 auf entgegensetzten Längsseiten des Behälterzulaufförderers 14 angeordnet. Die Behälterauslaufförderer 16, 18 können einander bspw. direkt gegenüberliegen.

Der erste Behälterauslaufförderer 16 ist vorzugsweise direkt stromabwärts von dem ersten Transportstern 20 angeordnet. Der erste Transportstern 20 kann Behälter 12 von dem Behälterzulaufförderer 14 übernehmen und an den ersten Behälterauslaufförderer 16 übergeben.

Der zweite Behälterauslaufförderer 18 ist vorzugsweise direkt stromabwärts von dem zweiten Transportstern 21 angeordnet. Der zweite Transportstern 21 kann Behälter 12 von dem Behälterzulaufförderer 14 übernehmen und an den zweiten Behälterauslaufförderer 18 übergeben.

Die Transportsterne 20, 21 können abwechselnd Behälter 12 von dem Behälterzulaufförderer 14 übernehmen und zum jeweils stromabwärts von diesen angeordneten Behälterauslaufförderer 16 bzw. 18 übergeben.

Es versteht sich, dass auch die Vorrichtung 10' und die Vorrichtung 10" statt der Vorrichtung 10 in der unter Bezugnahme auf die Figur 2 beschriebenen Behälterbehandlungsanlage 26 oder in einer anderen Behälterbehandlungsanlage umfasst sein können.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Konfiguration des einspurigen Behälterzulaufförderers, des ersten einspurigen Behälterauslaufförderers, des zweiten einspurigen Behälterauslaufförderers und/oder des mindestens einen Transportsterns des unabhängigen Anspruchs 1 offenbart.

### Bezugszeichenliste

- 10: Vorrichtung zum Verteilen von Behältern
- 12: Behälter
- 14: einspuriger Behälterzulaufförderer
- 16: erster einspuriger Behälterauslaufförderer
- 18: zweiter einspuriger Behälterauslaufförderer
- 20: (erster) Transportstern
- 21: zweiter Transportstern
- 22: erste Behälterhalterung
- 24: zweite Behälterhalterung
- 26: Behälterbehandlungsanlage
- 28: Fülleinrichtung
- 30: Verschließeinrichtung
- 32: erster Behälterzulaufförderer
- 34: zweiter Behälterzulaufförderer
- 36: Behälterförderer
- 38: Behälterbehandlungseinrichtung

- T1: erste Teilung
- T2: zweite Teilung

## Patentansprüche

1. Vorrichtung (10) zum Verteilen von Behältern (12) für eine Behälterbehandlungsanlage (26), aufweisend:
einen einspurigen Behälterzulaufförderer (14);
einen ersten einspurigen Behälterauslaufförderer (16), der als ein Linearförderer ausgeführt ist;
einen zweiten einspurigen Behälterauslaufförderer (18), der als ein Linearförderer ausgeführt ist; und
mindestens einen Transportstern (20, 21) mit mehreren Behälterhalterungen (22, 24) zum Halten der Behälter (12), wobei der mindestens eine Transportstern (20, 21) den einspurigen Behälterzulaufförderer (14) mit dem ersten einspurigen Behälterauslaufförderer (16) und dem zweiten einspurigen Behälterauslaufförderer (18) verbindet und dazu ausgebildet ist, die von dem einspurigen Behälterzulaufförderer (14) mit den mehreren Behälterhalterungen (22, 24) übernommenen Behälter (12), vorzugsweise gleichmäßig oder ungleichmäßig, auf den ersten einspurigen Behälterauslaufförderer (16) und den zweiten einspurigen Behälterauslaufförderer (18) aufzuteilen.

2. Vorrichtung (10) nach Anspruch 1, wobei:
der mindestens eine Transportstern (20, 21) dazu ausgebildet ist, die von dem einspurigen Behälterzulaufförderer (14) übernommenen Behälter (12) abwechselnd zu dem ersten einspurigen Behälterauslaufförderer (16) und dem zweiten einspurigen Behälterauslaufförderer (18) zu transportieren.

3. Vorrichtung (10) nach Anspruch 1 oder Anspruch 2, wobei:
der mindestens eine Transportstern (20, 21) dazu ausgebildet ist, die mit einer ersten vorbestimmten Teilung (T1) von dem einspurigen Behälterzulaufförderer (14) übernommenen Behälter (12) an den ersten einspurigen Behälterauslaufförderer (16) und den zweiten einspurigen Behälterauslaufförderer (18) mit jeweils einer zweiten vorbestimmten Teilung (T2) zu übergeben, wobei die erste vorbestimmte Teilung (T1) kleiner ist als die zweite vorbestimmte Teilung (T2), vorzugsweise halb so groß wie die zweite vorbestimmte Teilung (T2).

4. Vorrichtung (10) nach einem der vorherigen Ansprüche, wobei:
der mindestens eine Transportstern (20, 21) einen einzigen Transportstern (20) aufweist.

5. Vorrichtung (10) nach Anspruch 4, wobei:
die mehreren Behälterhalterungen (22, 24) zumindest teilweise bezüglich einer Drehachse des Transportsterns (20) radial bewegbar, vorzugsweise ein- und ausfahrbar, sind.

6. Vorrichtung (10) nach Anspruch 5, wobei:
der Transportstern (20) eine, vorzugsweise mechanische, Steuerung aufweist, die dazu konfiguriert ist:
eine Radialbewegung nach außen mehrerer erster Behälterhalterungen (22) der mehreren Behälterhalterungen (22, 24) derart zu bewirken, dass von den mehreren ersten Behälterhalterungen (22) hin zu dem ersten einspurigen Behälterauslaufförderer (16) transportierte Behälter (12) ausgehend von dem einspurigen Behälterzulaufförderer radial nach außen bewegt werden, vorzugsweise während einer Drehung des Transportsterns (20) und/oder bis auf eine Radialposition eines Übernahmeabschnitts des ersten einspurigen Behälterauslaufförderers (16) bezüglich der Drehachse; und/oder
eine Radialbewegung nach innen mehrerer zweiter Behälterhalterungen (24) der mehreren Behälterhalterungen (22, 24) derart zu bewirken, dass von den mehreren zweiten Behälterhalterungen (24) hin zu dem zweiten einspurigen Behälterauslaufförderer (18) transportierte Behälter (12) ausgehend von dem einspurigen Behälterzulaufförderer (14) radial nach innen bewegt werden, vorzugsweise während einer Drehung des Transportsterns (20) und/oder bis auf eine Radialposition eines Übernahmeabschnitts des zweiten einspurigen Behälterauslaufförderers (18) bezüglich der Drehachse.

7. Vorrichtung (10') nach Anspruch 4, wobei:
die mehreren Behälterhalterungen (22, 24) zumindest teilweise vertikal bewegbar sind.

8. Vorrichtung (10') nach Anspruch 7, wobei:
der Transportstern (20) eine, vorzugsweise mechanische, Steuerung aufweist, die dazu konfiguriert ist:
eine Vertikalbewegung nach unten mehrerer erster Behälterhalterungen (22) der mehreren Behälterhalterungen (22, 24) derart zu bewirken, dass von den mehreren ersten Behälterhalterungen (22) hin zu dem ersten einspurigen Behälterauslaufförderer (16) transportierte Behälter (12) gegenüber dem einspurigen Behälterzulaufförderer (14) abgesenkt werden, vorzugsweise während einer Drehung des Transportsterns (20) und/oder bis auf eine Höhe des ersten einspurigen Behälterauslaufförderers (16); und/oder
eine Vertikalbewegung nach oben mehrerer zweiter Behälterhalterungen (24) der mehreren Behälterhalterungen (22, 24) derart zu bewirken, dass von den mehreren zweiten Behälterhalterungen (24) hin zu dem zweiten einspurigen Behälterauslaufförderer (18) transportierte Behälter (12) gegenüber dem einspurigen Behälterzulaufförderer (14) angehoben werden, vorzugsweise während einer Drehung des Transportsterns (20) und/oder bis auf eine Höhe des zweiten einspurigen Behälterauslaufförderers (18).

9. Vorrichtung (10") nach einem der Ansprüche 1 bis 3, wobei:
der mindestens eine Transportstern (20, 21) einen ersten Transportstern (20) und einen zweiten Transportstern (21) aufweist;
der erste einspurige Behälterauslaufförderer (16) stromabwärts von dem ersten Transportstern (20) angeordnet ist; und
der zweite einspurige Behälterauslaufförderer (18) stromabwärts von dem zweiten Transportstern (21) angeordnet ist.

10. Vorrichtung (10") nach Anspruch 9, wobei:
der einspurige Behälterzulaufförderer (14) als ein Linearförderer ausgeführt ist; und
der erste Transportstern (20) und der zweite Transportstern (21) auf entgegengesetzten Längsseiten des einspurigen Behälterzulaufförderers (14) angeordnet sind, vorzugsweise einander direkt gegenüberliegend.

11. Vorrichtung (10") nach Anspruch 9 oder Anspruch 10, wobei:
der erste Transportstern (20) und der zweite Transportstern (21) dazu ausgebildet sind, mit den jeweiligen Behälterhalterungen (22, 24) die Behälter (12) von dem einspurigen Behälterzulaufförderer (14) abwechselnd zu übernehmen.

12. Vorrichtung (10) nach einem der vorherigen Ansprüche, wobei:
der erste einspurige Behälterauslaufförderer (16) und der zweite einspurige Behälterauslaufförderer (18) parallel zueinander angeordnet sind, vorzugsweise nebeneinander auf gleicher Höhe oder übereinander.

13. Behälterbehandlungsanlage (26) aufweisend:
eine Vorrichtung (10) nach einem der vorherigen Ansprüche,
wobei die Behälterbehandlungsanlage (26) ferner mindestens eines aufweist von:
- eine Fülleinrichtung (28), vorzugsweise Füllerkarussell, zum Füllen der Behälter (12), die vorzugsweise stromaufwärts von der Vorrichtung (10) angeordnet ist;
- eine Verschließeinrichtung (30), vorzugsweise Verschließerkarussell, zum Verschließen der Behälter (12), die stromaufwärts von der Vorrichtung (10) angeordnet ist oder die den einspurigen Behälterzulaufförderer (14) aufweist oder die den mindestens einen Transportstern (20, 21) aufweist;
- eine Pasteurisiereinrichtung mit zwei, vorzugsweise übereinander angeordneten, Behältereinlässen, wobei einer der zwei Behältereinlässe stromabwärts von dem ersten einspurigen Behälterauslaufförderer (16) angeordnet ist und der andere der zwei Behältereinlässe stromabwärts von dem zweiten einspurigen Behälterauslaufförderer (18) angeordnet ist; und
- eine erste Etikettiereinrichtung zum Etikettieren der Behälter, die stromabwärts von dem ersten einspurigen Behälterauslaufförderer (16) angeordnet ist, und eine zweite Etikettiereinrichtung, die stromabwärts von dem zweiten einspurigen Behälterauslaufförderer (18) angeordnet ist.

14. Verfahren zum Verteilen von Behältern (12), vorzugsweise mittels einer Vorrichtung nach einem der Ansprüche 1 bis 12, aufweisend:
Zuführen der Behälter (12) zu mindestens einem Transportstern (20, 21) mittels eines einspurigen Behälterzulaufförderers (14);
Übernehmen der zugeführten Behälter (12) mittels mehrerer Behälterhalterungen (22, 24) des mindestens eines Transportsterns (20, 21); und
gleichmäßiges Aufteilen der übernommenen Behälter (12) zu einem ersten einspurigen Behälterauslaufförderer (16), der als ein Linearförderer ausgeführt ist, und einem zweiten einspurigen Behälterauslaufförderer (18), der als ein Linearförderer ausgeführt ist, mittels des mindestens einen Transportsterns (20, 21).

15. Verfahren nach Anspruch 14, wobei:
das gleichmäßige Aufteilen ein abwechselndes Transportieren der übernommenen Behälter (12) zu dem ersten einspurigen Behälterauslaufförderer (16) und dem zweiten einspurigen Behälterauslaufförderer (18) mittels des mindestens einen Transportsterns (20, 21) aufweist; und/oder
das Zuführen der Behälter (12) mit einer ersten vorbestimmten Teilung (T1) erfolgt und das gleichmäßige Aufteilen derart erfolgt, dass die Behälter (12) an den ersten einspurigen Behälterauslaufförderer (16) und den zweiten einspurigen Behälterauslaufförderer (18) mit jeweils einer zweiten vorbestimmten Teilung (T2) übergeben werden, wobei die erste vorbestimmte Teilung (T1) kleiner als die zweite vorbestimmte Teilung (T2) ist, vorzugsweise halb so groß.
